Europäisches Patentamt

European Patent Office

Office européen des brevets

(11) Publication number: **0 276 570**
**A2**

## (12) EUROPEAN PATENT APPLICATION

(21) Application number: 87311370.8

(22) Date of filing: 23.12.87

(51) Int. Cl.⁴: **C08J 5/18** , C08L 23/04 , C08L 51/06

(30) Priority: 29.12.86 GB 8630961

(43) Date of publication of application:
03.08.88 Bulletin 88/31

(84) Designated Contracting States:
DE FR GB IT NL

(71) Applicant: DU PONT CANADA INC.
Box 2200 Streetsville Postal Station
Mississauga Ontario L5M 2H3(CA)

(72) Inventor: Kelly, Peter Yates
P.O. Box 866 Kingston
Ontario K7L 4X6(CA)

(74) Representative: Ellis, John Clifford Holgate et al
MEWBURN ELLIS & CO. 2/3 Cursitor Street
London EC4A 1BQ(GB)

(54) **Method for the manufacture of polyolefin film from blends of polyolefins.**

(57) A method for the manufacture of film from blends of polyolefins is disclosed. The blend is comprised of a polyethylene and up to 20% by weight of the blend of a polyethylene grafted with 0.5 to 2.0% by weight of an ethylenically unsaturated carboxylic acid or anhydride, especially maleic anhydride. The polyethylene may be a homopolymer of ethylene or a copolymer of ethylene and a $C_4$-$C_{10}$ hydrocarbon alpha-olefin, especially so-called linear low density polyethylene. The addition of graft polyethylene results in increased melt strength of the polyethylene, and thus higher production rates, while substantially retaining properties, especially tear strength and optical properties, of the resultant film.

EP 0 276 570 A2

## METHOD FOR THE MANUFACTURE OF POLYOLEFIN FILM FROM BLENDS OF POLYOLEFINS

The present invention relates to a method for the manufacture of polyolefin film from blends of polyolefins and especially to the manufacture of such film from a physical admixture of a polymer of ethylene and a grafted polymer of ethylene.

Polymers of ethylene, for example homopolymers of ethylene and copolymers of ethylene and hydrocarbon alpha-olefins, are used in large volumes for a variety of end-uses, including the manufacture of film. Such film is used in, for example, the packaging industry.

In the manufacture of film from polymers of ethylene, it may be found that the process for the manufacture of film is capable of improvement, especially with respect to the manufacture of film of acceptable quality in a commercially-viable manner. The improvement may be capable of being made with respect to the apparatus, the processing technique and/or the polymer composition fed to the process. In some circumstances, the apparatus may not have been intended for use with the particular type of polymer that is fed to the apparatus. For instance, apparatus designed for use with so-called high pressure polyethylene may not be readily adaptable for use with linear polymers of ethylene and/or may only be capable of producing film that is not of commercially-acceptable quality.

European patent publication 0 172 650 of G. White, published 1986 February 26, describes an improved method for the extrusion of homopolymers of ethylene and copolymers of ethylene and hydrocarbon alpha-olefins, in which a physical admixture of a major portion of particles of polymer is admixed with a minor portion of particles of a composition of a polymer and a cross-linking agent. Such a method is particularly useful in the extrusion of linear polymers of ethylene in apparatus that might not have been designed for use with such polymers and/or is capable of improvement when used with such polymers. However, the method is capable of further improvement, especially with regard to some physical properties of the resultant film, especially tear strength and optional properties.

Processes for the grafting of ethylenically unsaturated carboxylic acids and anhydrides thereof onto polymers of ethylene are known in the art. A preferred example of such a process is described in the U.S. Patent 4 612 155 of C.S. Wong and R.A. Zelonka, issued 1986 September 16.

U.S. Patent 3 804 926 of E.C.A. Schwarz et al., issued 1974 April 16, describes an improvement in the extrusion performance and physical properties of isotactic polypropylene, low density polyethylene, ethylene/propylene copolymers and polybutene-1 by melt blending 100 parts by weight of such polymers with 0.05-5 parts by weight of maleic anhydride and 0.2-10 parts by weight of an aromatic compound. Examples of aromatic compounds are polystyrene, cumene, m-di-isopropyl benzene and 1,1-diphenylethane.

Japanese patent application 59 215 828 of Gunz K.K., published 1984 December 04, discloses stretching film formed from linear low density polyethylene and modified polyethylene. In an example, a composition of 100 parts by weight of linear low density polyethylene of density 0.920 g/cm$^3$ and a melt index of 2.1 dg/min. and 40 parts by weight of a modified polyethylene prepared by graft polymerizing polyethylene with maleic anhydride, was extruded and the resultant film was stretched.

Compositions of high melt tension and formed from, for example, polyethylene having, in particular, maleic anhydride grafted onto the polyethylene are disclosed in Japanese patent application 59 084 940 of Showa Denko K.K., published 1984 May 16. The compositions are stated to be useful for blow moulding and moulding of sheets and laminated films.

A method for the improvement of a process for the manufacture of film from polyethylene has now been found, in which the melt strength of the polymer may be increased significantly while substantially retaining certain physical properties in the resultant film.

Accordingly, the present invention provides in a process for the manufacture of film from polyethylene in which the polyethylene in a molten state is extruded through an annular die in the form of a tube and the resultant tube is expanded and cooled, the improvement comprising feeding to the extruder a blend comprising, in physical admixture, a major portion of particles of a first polyethylene and a minor portion of particles of a second polyethylene, each of said polyethylenes being selected from the group consisting of homopolymers of ethylene and copolymers of ethylene and at least one C$_4$-C$_{10}$ hydrocarbon alpha-olefin, said first polyethylene being at least 80% by weight of the physical admixture and consisting of 75-100% by weight of linear polyethylene and 0-25% by weight of high pressure low density polyethylene, said second polyethylene having been grafted with 0.5 to 2.0% by weight of at least one of an ethylenically unsaturated carboxylic acid and an anhydride thereof.

In a preferred embodiment of the method of the present invention, the first and second polyethylenes are linear polymers.

In another embodiment, the first polyethylene is a blend of linear low density polyethylene and low density high pressure polyethylene.

The present invention also provides a blend of polymers, said blend comprising a physical admixture of a major portion of particles of a first polyethylene and a minor portion of particles of a second polyethylene, each of said polyethylenes being selected from the group consisting of homopolymers of ethylene and copolymers of ethylene and at least one $C_4$-$C_{10}$ hydrocarbon alpha-olefin, said first polyethylene being at least 80% by weight of the physical admixture and consisting of 75-100% by weight of linear polyethylene and 0-25% by weight of high pressure low density polyethylene, said second polyethylene having been grafted with 0.5 to 2.0% by weight of at least one of an ethylenically unsaturated carboxylic acid and an anhydride thereof.

The present invention relates to a method for the manufacture of film from polyethylene. Techniques for the manufacture of such film are known in the art and, in particular, include the so-called blown film process. In that process, polyethylene in comminuted form, usually in the form of pellets or granules, is fed to an extruder. The polyethylene is heated to a molten state, subjected to a mixing action by means of the screw in the extruder so as to provide molten polyethylene of adequate uniformity, and extruded through an annular die. The resultant tube of molten polyethylene is then expanded by means of pressure of gas e.g. nitrogen, air or helium supplied to the inside of the tube, so that a combination of the pressure, the geometry of the annular die and the rate at which the tube is removed from the die results in the manufacture of film of the desired thickness. The tube of molten polyethylene is cooled to solidify the polymer and the resultant film is usually slit and wound up on a roll.

Polyethylene is commercially available and, as will be appreciated by those skilled in the art, there are a number of methods for the manufacture of polyethylene from monomer(s). For example, ethylene may be homopolymerized in the presence of free radical catalysts and under high pressure to form so-called high-pressure polyethylene. Alternatively, polyethylene may be manufactured by the homopolymerization or copolymerization of ethylene at relatively low pressures and in the presence of a coordination catalyst. The latter polymers may be referred to as linear polyethylene, and may be homopolymers of ethylene or copolymers of ethylene and at least one $C_4$-$C_{10}$ hydrocarbon alpha-olefin, especially butene-1, hexene-1 and/or octene-1. While such polymers may have densities in the range of about 0.910 to 0.965 g/cm$^3$, the polymers preferably have densities in the range of about 0.910 to 0.930, especially 0.915 to 0.925, g/cm$^3$; the preferred polymers may be referred to herein as linear low density polyethylene. As will be appreciated by those skilled in the art, polymers useful for the manufacture of film usually have a melt index of less than 10 dg/min, especially in the range of 0.5 to 5 dg/min; melt index is measured by the procedure of ASTM D-1238 (condition E).

In embodiments of the present invention, the polyethylene is linear low density polyethylene or a blend of linear low density polyethylene and a low density polyethylene manufacture by a so-called high pressure process. Such low density polyethylene should be not more than 25% by weight of the blend.

In the improvement of the method of the present invention, a blend of polyethylenes in the form of a physical admixture is fed to the extruder. The polyethylenes of the physical admixture are each selected from homopolymers of ethylene and copolymers of ethylene and hydrocarbon alpha-olefins, as defined above. The polyethylene of the major portion may be the same or different from the polyethylene of the minor portion. The latter polyethylene does, however, differ from the polyethylene of the major portion in that the second polyethylene is a grafted polymer. The polyethylene has been grafted with 0.5 to 2.0% by weight of at least one ethylenically unsaturated carboxylic acid or anhydride thereof. Methods for the grafting of polymers are known in the art. A preferred method is that of C.S. Wong and R.A. Zelonka referred to above. In such a method, the polyethylene to be grafted is fed, as a physical admixture, to an extruder with compositions of a polymer and the grafting monomer and an organic peroxide. The resultant blend is admixed in a molten state in the extruder such that only a minor amount of the peroxide is decomposed, and then heated in the extruder for a further period of time, usually at a higher temperature. The resultant grafted polymer is then extruded from the extruder.

In preferred embodiments of the invention, the grafting monomer is maleic acid or, especially, maleic anhydride.

The first and second polyethylenes are chosen so that a homogeneous melt blend is formed in the extruder used in the method. Thus, the selection of the first and second polyethylene, with respect to melt viscosity characteristics, will depend to a large extent on the extrusion apparatus to be used, especially the design of the screw, as will be understood by those skilled in the art.

The first polyethylene comprises at least 80% by weight of the physical admixture, and especially 95% to 99% by weight of the physical admixture.

In an embodiment of the present invention, the second polyethylene of the physical admixture fed to

3

the extruder is in the form of a composition of a grafted polymer and an organic peroxide cross-linking agent. The preferred organic peroxides are bis(tert. alkyl peroxy alkyl) benzenes, dicumyl peroxide and acetylenic diperoxy compounds, Examples of such peroxides include 2,5-dimethyl-2,5 bis(tert. butyl peroxyisopropyl) benzene, which is available commercially under the trademark Vulcup, and 2,5-dimethyl-2,5-di(tert. butylperoxy) hexyne-3, which is available commercially under the trademark Lupersol. Preferably, the composition of polymer and organic peroxide contains less than 4%, and especially 0.05 to 1.0%, by weight of peroxide. The composition of polymer and peroxide is admixed into the admixtures of the invention in amounts of less than 20% by weight of the admixture, and especially 1 to 5% by weight of the composition. The addition of organic peroxide to the grafted polymer may have a synergistic effect on the melt strength in the method of the present invention.

The present invention also relates to the blends that have been described herein with reference to the method of the invention.

As will be appreciated by those skilled in the art, stabilizers and other additives may be incorporated into the blends of the method of the invention. In particular, antioxidants and ultra violet stabilizers may be added. Moreover, the blends may contain slip agents, anti-static agents, pigments, nucleating or other processing aids or the like. Examples of nucleating or other processing aids include talc, silica, fluorinated elastomers and polyolefin waxes. The use of fluorinated elastomers as processing aids is known in the art, being described in, for instance, U.S. Patent 3 125 547 of P.S. Blatz, which issued 1964 March 17.

As will be understood by those skilled in the art, stabilizing or other additives may have detrimental effects on the reaction of cross-linking agents, if present, and for that reason it may not be desirable to use certain combinations of additives in the polyethylene.

The particles of the first and second polyethylenes may be any convenient size and shape and may for example be granules, powder, pellets or the like. Such forms are commercially available forms of polyethylene and/or may be obtained by known techniques e.g. by grinding, melt pelletization and the like. However, it is preferred that the particles of the first and second polyethylene be of substantially the same size. As the difference in size between the particles increases, so does the possibility that the two types of particle will separate from one another during storage, transportation or other handling of the admixtures; such differences may be less critical if the admixtures are to be fed to an extruder shortly after admixing of the components.

The physical admixture is fed to extrusion apparatus, especially an extruder of apparatus intended for the manufacture of film by the so-called blown film method. Such apparatus is known to those skilled in the art. The admixture is fed to the extruder, heated and mixed within the extruder to form a molten polymer composition of acceptable uniformity. The resultant molten composition is then extruded through an annular die to form a tube of molten polymer. The tube is expanded and cooled so as to form film. The tubular film thus obtained is then slit and wound up on rolls.

The operation of a blown film process using the method of the present invention may result in significant increases in the rate of production of film of acceptable quality. Moreover, the admixtures may permit the manufacture of film from linear low density polyethylene using apparatus that was intended for use with so-called conventional or high pressure polyethylene. In some circumstances, the method of the present invention will result in improvements in film production with linear low density polyethylene compared with the method disclosed in the aforementioned European publication of G. White.

The process of the present invention is further illustrated by the following examples:

Example I

Using a blown film extrusion apparatus equipped with a 6.5cm screw, an admixture in which the major portion was SCLAIR 13J4 polyethylene was extruded into film having a thickness of about 25 microns. SCLAIR 13J4 polyethylene is an ethylene/octene-1 copolymer having a density of 0.926 g/cm$^3$ and a melt index of 1.0 dg/min. The minor portion of the admixture was a grafted polymer, formed by grafting about 0.6% by weight of maleic anhydride onto SCLAIR 2113 polyethylene using the melt grafting process of the aforementioned patent of C.S. Wong and R.A. Zelonka; SCLAIR 2113 is an ethylene/butene-1 copolymer having a density of 0.924 g/cm$^3$ and a melt index of 20 dg/min. The minor portion optionally also contained 0.3% by weight of Lupersol 130 organic peroxide.

Further details and the results obtained are given in Table I.

4

## TABLE I

| Run No. | Graft Polymer (wt %) | Peroxide in Graft Polymer (ppm) | MD Tear g/mm | Production Rate Increase (%) |
|---|---|---|---|---|
| 1 | 0 | 0 | 43 | - |
| 2 | 2 | 0 | 55 | 25 |
| 3 | 2 | 3000 | 31 | 35 |
| 4 | 0 | 0 | 27 | 32 |

NB    MD tear is the tear strength of the film in the machine direction, as measured by the procedure of ASTM D 1922.

Rate increase is the increase in rate of extrusion of film of acceptable quality, compared to polyethylene without added second polymer (Run 1).

Run 1 is a comparison run using the polyethylene of the major portion without second (graft) polymer. In Run 4, 60 ppm of peroxide was incorporated into the first polyethylene.

From a comparison of Runs 1 and 2, it will be noted that an increase in production rate was achieved without a decrease in the tear strength of the resultant film. Addition of organic peroxide to either the first polyethylene or the graft copolymer resulted in an increase in production rate but a decrease in the tear strength of the resultant film.

Example II

The procedure of Example I was repeated, except that the film that was produced had a thickness of 150 microns.

Further details and the results obtained are given in Table II.

## Table II

| Run No. | Graft Polymer (%) | Peroxide in Graft Polymer ppm | MD Tear g/mm | Rate Increase (%) |
|---|---|---|---|---|
| 5 | 0 | 0 | 75 | - |
| 6 | 1.5 | 3000 | 59 | 85 |
| 7 | 0 | 0 | 75 | 22 |
| 8 | 1.5 | 0 | 75 | 10 |

Runs 5 and 7 are comparison runs without graft copolymer; 50 ppm of peroxide was incorporated into the first polyethylene of Run 7.

From a comparison of Run 6 with Runs 7 and 8, it will be noted that a synergistic increase in production rate was achieved when the graft copolymer also contained peroxide.

Example III

The procedure of Example I was repeated using CF-0218A polyethylene obtained from NOVA, an Alberta Corporation; this polyethylene is an ethylene/butene-1 copolymer having a density of 0.920 $g/cm^3$ and a melt index of 2 dg/min. The film that was produced had a thickness of 12.5 microns.

Further details and the results obtained are given in Table III.

## Table III

| Run No. | Graft Polymer (%) | MD Tear g/mm | Rate Increase (%) |
|---------|-------------------|--------------|-------------------|
| 9 | 0 | 62 | - |
| 10 | 2 | 39 | 33 |
| 11 | 0 | 29 | 33 |

Runs 9 and 11 are comparative runs. In Run 11, 50 ppm of peroxide was incorporated into the first polyethylene.

The increase in production rate obtained in Run 10 and 11 was the same, but the film obtained in Run 10 had a higher tear strength.

## Claims

1. In a process for the manufacture of film in which polyethylene in a molten state is extruded through an annular die of an extruder in the form of a tube and the resultant tube is expanded and cooled, the improvement comprising feeding to the extruder a blend comprising, in physical admixture, a major portion of particles of a first polyethylene and a minor portion of particles of a second polyethylene, each of said polyethylenes being selected from the group consisting of homopolymers of ethylene and copolymers of ethylene and at least one $C_4$-$C_{10}$ hydrocarbon alpha-olefin, said first polyethylene being at least 80% by weight of the physical admixture and consisting of 75-100% by weight of linear polyethylene and 0-25% by weight of high pressure low density polyethylene, said second polyethylene having been grafted with 0.5 to 2.0% by weight of at least one of an ethylenically unsaturated carboxylic acid and an anhydride thereof, the first and second polyethylene being selected so that a homogeneous blend thereof is formed in the extruder.

2. The method of Claim 1 in which the ethylenically unsaturated carboxylic acid and anhydride are maleic acid and maleic anhydride, respectively.

3. The method of Claim 2 in which the first and second polyethylenes are linear polymers.

4. The method of Claim 2 in which the first polyethylene is a blend of linear low density polyethylene and low density high pressure polyethylene.

5. The method of any one of Claims 1-4 in which the second polyethylene contains an organic peroxide cross-linking agent in an amount of up to 4% by weight.

6. The method of Claim 5 in which the second polyethylene contains 0.05-1% by weight of the organic peroxide.

7. A blend of polymers, said blend comprising a physical admixture of a major portion of particles of a first polyethylene and a minor portion of particles of a second polyethylene, each of said polyethylenes being selected from the group consisting of homopolymers of ethylene and copolymers of ethylene and at least one $C_4$-$C_{10}$ hydrocarbon alpha-olefin, said first polyethylene being at least 80% by weight of the physical admixture and consisting of 75-100% by weight of linear polyethylene and 0-25% by weight of high pressure low density polyethylene, said second polyethylene having been grafted with 0.5 to 2.0% by weight of at least one of an ethylenically unsaturated carboxylic acid and an anhydride thereof, said second polyethylene containing 0.05-1% by weight of an organic peroxide cross-linking agent, and the first and second polyethylene being capable of being formed into a homogeneous molten mixture.

8. The blend of Claim 7 in which the ethylenically unsaturated carboxylic acid and anhydride are maleic acid and maleic anhydride, respectively.

9. The blend of Claim 8 in which the first and second polyethylenes are linear polymers.

10. The blend of Claim 8 in which the first polyethylene is a blend of linear low density polyethylene and low density high pressure polyethylene.